# EUROPEAN PATENT APPLICATION

(11) **EP 2 950 481 A1**
(43) Date of publication of application: **02.12.2015**
(21) Application number: 14305821.2
(22) Date of filing: 30.05.2014
(51) Int. Cl.: H04L 12/24, G06F 9/50, H04L 12/26

(54) **Service dependency management for virtualized networks**

(71) Applicant: Alcatel Lucent, 92100 Boulogne-Billancourt (FR)
(72) Inventor: Sienel, Juergen, 70435 Stuttgart (DE); Cherubini, Davide, Dublin (IE); Lugones, Diego, Dublin (IE); Voith, Thomas, 70435 Stuttgart (DE); Braun, Stefanie, 70435 Stuttgart (DE); Riemer, Joachim, 70435 Stuttgart (DE); Hilt, Volker Friedrich, 70435 Stuttgart (DE)
(74) Representative: Novagraaf Technologies

(57) **Abstract**

This invention relates to a management apparatus (SDM) for dynamically adapting the deployment of network elements (NE₁, NE₂, NE₃) of a network (N) onto a underlying virtual infrastructure, the network providing at least a service made of one or several functions (F₁₁, F₁₂, F₁₃... F₃₄) linked by a service graph (SC) and provided by said network elements. The management apparatus comprises:
- A data collector (CD) for receiving measurements (M) from the underlying virtual infrastructure;
- An analysis module (AM) for, from said measurements, detecting a change related to a function among the one or several functions and determining adaptation actions (A) according to dependencies information (DI) related to dependencies between said functions;
- An action dispatcher (AD) for transmitting (S₄) these adaptation actions toward said underlying virtual infrastructure for adapting the deployment.

## Description

### FIELD OF THE INVENTION

The invention relates to virtualized networks, especially virtualized telecommunication networks. In particular, it concerns the dynamic adaptation of the deployment of a network onto an underlying virtual infrastructure according to its load.

### BACKGROUND OF THE INVENTION

In recent years, the concepts of virtualized network and network functions virtualization (NFV) have been introduced in the domain of telecommunication and data networking to take benefit of the technologies developed in the IT (Information Technologies) domain regarding the abstraction of the functions from the underlying hardware technology and from the actual hardware resources (CPU, memories, etc.)

Legacy data networks as well as virtualized data networks can be considered as an interconnected set of network elements, each network element providing one or several (network) functions.

The network itself can provide services, e.g. telecommunication services, to the users. These services are made of one or several functions linked together in a specific way to provide the users of this service their individual functionality. The set of services function and the linkage between them for the multicity of users can be represented as a service chain, or, more generally, as a service graph. An example of such a service graph is an application load balancer directing messages to a set of web servers, which contact a database to retrieve and/or data and send the result of to one or multiple data processor for further processing.

For instance, a Voice over IP (VoIP) service over an IMS (IP Multimedia Subsystem) typically involves a control or signaling plane and a data plane. Each plane consists itself of several functions provided by network elements.

An example of such a network element could be a CSCF (Call Session Control Function), comprising (at least) 3 functions: P-CSCF (Proxy-CSCF), S-CSCF (Serving-CSCF) and I-CSCF (Interrogating CSCF).

Another example could be a media conversion service. Such a service could be implemented by several network functions beholding both to the control (or signaling) plane (media gateway control, MGC) and to the data plane (media gateway MGW). The control plane is here in charge of identifying and instantiating the service elements needed to perform the required media conversion (packet-to-packet, transcoding, etc.) and the data plane function is in charge of doing the conversion on the media streams sent using e.g. RTP streams.

A related example of a network element could be a Media Gateway (MGW) comprising functions like a Service Control Module (SCM), a Packet Interface Module (PIM), a Media Processing Unit (MPU), etc.

Another related example could be a Media Gateway Controller comprising functions like a SIP distributor, a protocol distributor, a Call server, etc. Other examples in the field of web services, CDN (Content-Delivery Networks), etc. can also be considered.

In general, the concept of "virtualization" enables to split the functionality and the actual implementation. Typically, this virtualization is provided by an intermediate layer between the network functions and the actual hardware implementation: a "virtual infrastructure". The virtual infrastructure can be implemented in different ways, a common one consisting in having functions implemented by so-called "virtual machines" (VM). Other implementations do however exist in the art.

A Virtual Machine (VM) is a software implementation of a machine (e.g. a computer or data processing unit) that executes programs like a physical device. In other words, it presents a similar interface than a physical machine, but its actual implementation can differ and there is isolation between the interface and the implementation. It allows notably deploying and instantiating virtual machines on one or several physical machines, to dispatch it on different types of physical machines, or at different location of a network, in a transparent way regarding the provided function.

The mapping between network functions and the hardware resource (i.e. physical machines) thanks to the virtual machine can be adaptive.

For instance, when a network function sees an increase of its load (i.e. "activity"), an alarm could be triggered so as to update the mapping. For instance, the virtual machine implementing this function can be reconfigured, to allow more processing means. Or, additional virtual machines can be installed to implement the network function, this option also allowing more processing means for the network function.

Accordingly, the deployment of the virtualized network onto the underlying virtual infrastructure can be dynamically adapted to its load. Such a feature improves the performance of the overall system, the quality of service (QoS) from a user's perspective, the usage of the resources from a service providers' perspective, etc.

However, such a mechanism is insufficient, as it only reacts on problems: at a time an alarm is triggered, the network element and/or function already face a load problem. During the time of the adaption, the network goes on experiencing the load problem, jeopardizing the QoS, user's experiences, etc in other dependent network elements in the service graph.

### SUMMARY OF THE INVENTION

The object of the present invention is to alleviate at least partly the above mentioned drawbacks.

A first aspect of the invention consists in a method for adapting the deployment of network elements of a network onto a underlying virtual infrastructure, said network providing at least a service made of one or several functions linked by a service graph and provided by said network elements, said method comprising steps of:
- receiving measurements from said underlying virtual infrastructure;
- from said measurements, detecting a change related to a function among said one or several functions;
- determining adaptation actions according to dependencies information, related to dependencies between said functions;
- transmitting said adaptation actions toward said underlying virtual infrastructure for adapting said deployment.

Preferred embodiments comprise one or more of the following features, which can be taken separately or together, either in partial combination or in full combination.
- said dependencies information contains preconfigured information stored in a database;
- the method further comprises a step of analyzing said measurements for determining dependencies schemes between said functions and for updating said dependencies information according to said dependencies schemes;
- said step of analyzing is performed by pattern recognition and/or machine learning techniques;
- said change is an increase of a load parameter;
- said step of receiving further comprises receiving application-specific measurements.

Another aspect of the invention consists in a computer program product comprising computer-executable instructions for performing the method as previously defined, when run onto a data processing unit.

Another aspect of the invention consists in a digital data storage medium encoding a machine-executable program of instructions to perform the method as previously defined.

Another aspect of the invention consists in a management apparatus for dynamically adapting the deployment of network elements of a network onto a underlying virtual infrastructure, said network providing at least a service made of one or several functions linked by a service graph and provided by said network elements, said management apparatus comprising:
- a data collector for receiving measurements from said underlying virtual infrastructure;
- an analysis module for, from said measurements, detecting a change related to a function among said one or several functions and determining adaptation actions according to dependencies information related to dependencies between said functions;
- an action dispatcher for transmitting said adaptation actions toward said underlying virtual infrastructure for adapting said deployment.

Preferred embodiments comprise one or more of the following features, which can be taken separately or together, either in partial combination or in full combination.
- the management apparatus comprises a database for storing dependencies information containing preconfigured information;
- the management apparatus comprises a dependency updater for determining dependencies schemes between said functions and for updating said dependencies information according to said dependencies schemes.
- said analysis module is adapted to perform pattern recognition and/or machine learning techniques.
- said change is an increase of a load parameter.
- said step of receiving further comprises receiving application-specific measurements.

Another aspect of the invention consists in a system comprising a communication network made of network elements and a management apparatus as previously defined.

Further features and advantages of the invention will appear from the following description of embodiments of the invention, given as nonlimiting examples, with reference to the accompanying drawings listed hereunder.

### BRIEF DESCRIPTION OF THE DRAWINGS

Fig. 1 shows an example for a system comprising a communication network and a management apparatus, according to an embodiment of the invention.
Fig. 2 shows a possible internal architecture for a management apparatus.
Fig. 3 shows flow-chart according to an embodiment of the invention.

### DETAILED DESCRIPTION OF THE INVENTION

According to the invention, the actions triggered by an increase of load, or any other changes in the network, processing or application conditions, or any other metrics associated with some system conditions, are not only local (i.e. relate to a single function in the service) but also concerns other functions and network elements which are or can become concerned by this change.

In other words, the invention allows anticipating future changes, e.g. bottlenecks and critical conditions, in other parts of the network, thanks to knowledge of the dependencies between functions.

Consequently, the invention allows not only reacting on a problem but also anticipating future problems and adaptation of the deployment of the network element onto the underlying virtual infrastructure before the network element experiences an actual problem.

This allows of course an optimal adaptation to the predicted needs of the service graph, respecting predicted dependencies between service functions and scaling the overall network performances and the QoS. It allows also avoiding overprovisioning and thus reducing the costs of a network deployment.

Furthermore, according to embodiments of the invention, this knowledge can be "blind" in the sense that there is not need to provision fixed service chains (or, more generally, graphs) linking the functions. On the contrary, the knowledge can be built continuously: thanks to e.g. learning mechanisms, the dependencies can be discovered and gathered so that from any increase on one function, future increases on other functions can be deduced.

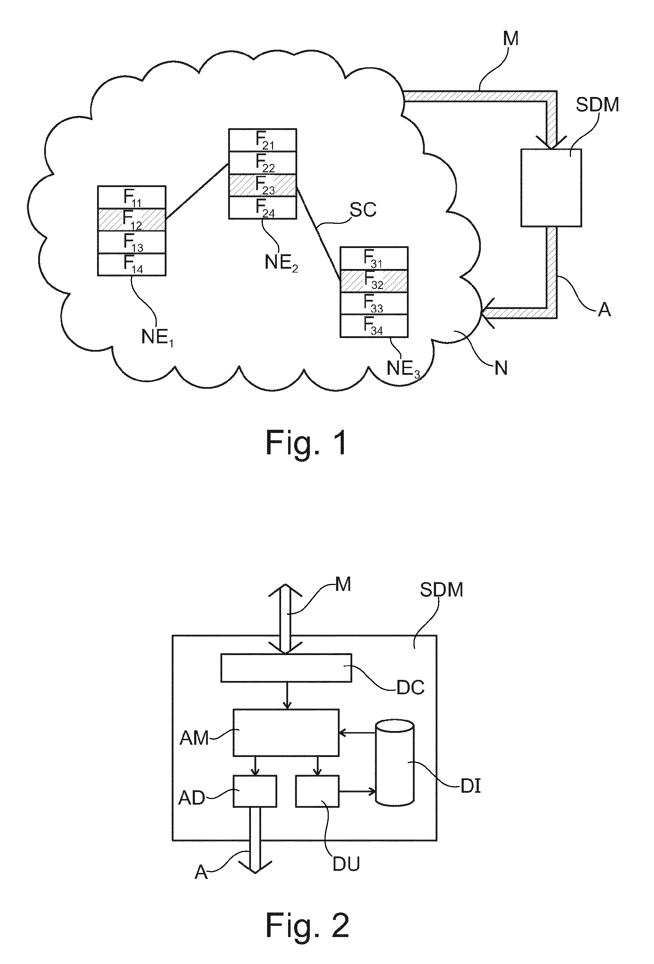

FIG. 1 shows an example of a network N associated with a Service Dependency Manager SDM according to the invention.

In the example, the network N comprises 3 network elements NE₁, NE₂, NE₃. Network elements can be any functional entity able to provide a service, or part of a service, in a communication network. It comprises various types of entities like routers, media gateways, media gateway controllers, billing systems, base stations (BTS, Node-B...), call servers, HSS (Home Subscriber Server), functional servers of the IMS (CSCF, Application Server, Signaling gateway SGW, GGSN,...), etc. It comprises also other entities in domains like web services, etc.

As communication networks can be compliant to many different technologies and implement an important number of standards, it is obviously impossible to establish an exhaustive list of the types of network elements.

Each network elements provides one or several functions (i.e. network functions). In some examples, these functions can be divided into those beholding to a signaling or control plane, and those beholding to a data plane.

In order to have the network providing a service, functions are linked so as to form a service chain, or, more generally, a service graph SC. The service is made of one or several functions linked by this service graph SC.

According to recent IETF draft, "service chaining" is the concept of applying an ordered set of services to a packet or a flow. Services in the chain may include network services like load balancing, firewalling, intrusion prevention, and routing among others.

In the FIG. 1, the service graph SC links the functions F₁₂, F₂₃ and F₃₂. Each of the network elements NE₁, NE₂, NE₃ contains 4 functions, respectively: F₁₁, F₁₂, F₁₃, F₁₄; F₂₁, F₂₂, F₂₃, F₂₄; F₄₁, F₄₂, F₄₃, F₄₄.

For instance, a network element like an IP (Internet Protocol) router can be made of an important number of various functions, both in the control plane (routing...), and in the data plane (or forwarding plane...)

Other examples include a CSCF functional element, which can comprise functions like: P-CSCF (Proxy-CSCF), S-CSCF (Serving-CSCF) and I-CSCF (Interrogating CSCF).

Another example could be a media conversion service. Such a service could be implemented by several network functions beholding both to the control (or signaling) plane (media gateway control, MGC) and to the data plane (media gateway MGW).

A related example of a network element could be a Media Gateway (MGW) comprising functions like a Service Control Module (SCM), a Packet Interface Module (PIM), a Media Processing Unit (MPU), etc.

In virtualized networks, the network elements are deployed onto an underlying virtual infrastructure. As it has been explained, this enables separating the functionality and the actual implementation.

This underlying virtual infrastructure can be implemented in various ways. In general, this infrastructure enables the network or the function (depending of the wished granularity) to be encapsulated into a software container. As this container is a software element, it can be physically deployed onto a hardware infrastructure in a flexible and adaptable way.

A typical implementation for such a virtual infrastructure consists in making use of virtual machines. A Virtual Machine (VM) is a software implementation of a machine (e.g. a computer or data processing device) that executes programs like a physical device, but intercepts and redirects all calls to physical interfaces to the virtualization layer.

In other words, it presents a similar interface than a physical machine, but its actual implementation can differ and there is isolation between the interface and the implementation. It allows notably deploying a virtual machine into one or several physical machine, to dispatch it on different types of physical machines, or at different location of a network, in a transparent way regarding the provided function. The mapping between network functions and the hardware resource (i.e. physical machines) thanks to the virtual machine can be adaptive.

Typically, a function can be mapped onto one virtual machine; or a network element can be mapped onto one virtual machine. Whether the mapping concerns network element or functions is a question of implementation, and can be decided by the operator of the network N.

Each virtual machine can correspond to one or several instances. The number of instances of a virtual machine implementing a given network element or function can depend on the load of this network element or function.

The load can be defined as any information (or "metric") collected and representative of the resource consumption required for processing the incoming data flow (including signaling data flow, control data flow, payload, etc.).

More precisely, the load can be one or a combination of the following load parameters: the CPU utilization, a number of incoming calls, a measurement of the traffic (e.g. bandwidth), a number of service requests, a number of connections, etc. The relevant information can depend on the corresponding network element or function.

If a function or a network element corresponds to an important or critical load, then it can be dispatched on several virtual machines, so as to balance this load.

It can also be possible to have a given virtual machine implementing several network elements.

The man skilled in the art would appreciate different ways to perform this mapping between the functions and network element and the underlying virtual infrastructure. The present invention can be considered as limited to any mapping. It is on the contrary independent of this mapping but concerns to the way the mapping (i.e. any mappings) can be dynamically adapted according to the measurements M.

In addition to these network elements NE₁, NE₂, NE₃, a Management apparatus, or Service Dependency Manager SDM, is provided and associated to the network N. This management apparatus takes as input measurements M and provides as output adaptation actions A, aiming at adapting the virtual infrastructure, according to the measurements M.

FIG. 2 shows a possible internal architecture for the management apparatus, or Service Dependency Manager, SDM.

The measurements can be any information representative of the load of the functions and/or network elements. They can be provided by the underlying virtual infrastructure.

This includes having a monitoring system (which can be internal or external to the infrastructure per se) collecting and reporting the measurements. For instance, a "cloud manager" or any other entity managing the underlying virtual infrastructure can transmit a part of these measurements M to a data collector DC of the management apparatus SDM. This part can comprise CPU utilization of the physical and virtual machines.

Also, network utilization and traffic patterns collected from the physical network interfaces and/or network routers, etc. can also be transmitted to the management apparatus SDM.

In general, the management apparatus SDM receives measurements M from all physical or virtual resources (CPU, memories, network...) on which a part of the underlying virtual infrastructure (e.g. the virtual machines) is running.

According to embodiments of the invention, further measurements M can be received from application-aware captor. For instance, an agent able to communicate with several or all parts of the application (e.g. realized inside each virtual machines) can retrieve application-specific information from one, several or all functions of a service graph SC.

The application-specific information may include: a number or active sessions and/or requests (per time period); a number of rejected/lost messages, response times; any additional quality metric deduced by the service implemented and running on the virtual machine.

Measurements can be transmitted to the management apparatus SDM as time-series of data. They can be transmitted in real-time and notified at the moment a new measurement is available; or buffered and transmitted according to a preset scheduling. The data collector DC can be in charge of applying various policies regarding the collection of the measurements M.

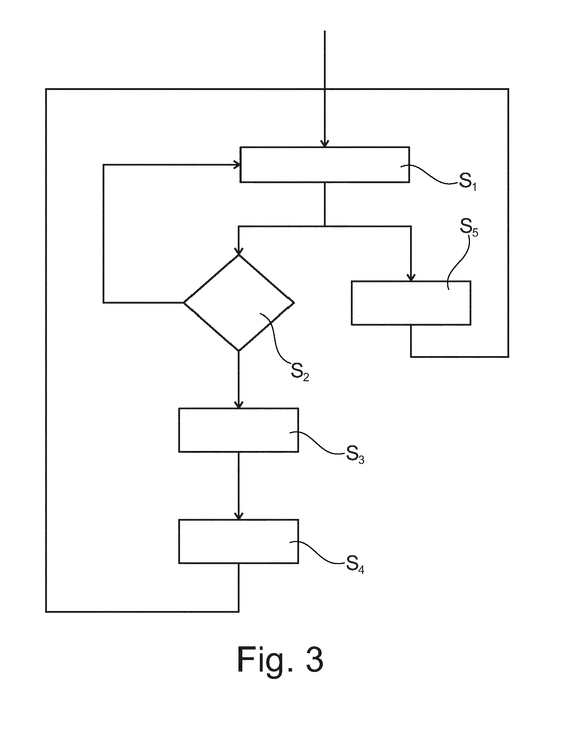

On the example flow-chart depicted on FIG. 3, the step of receiving the measurement M corresponds to the reference S₁.

The measurements M are then transmitted to an analysis module AM, in charge of detecting a change related to a function. This step corresponds to reference S₂ in FIG. 3. If no change is detected, the step loops back to the step S₁: the management apparatus SDM keeps on receiving measurements and testing them, until a change is detected and the algorithm can move forward to the next step, S₃.

The change is typically an increase of a load parameter, but other types of changes can also be taken into account by the invention, like e.g. a decrease of a load parameter. Typically also, the change concerns a network element or a particular function of a network element.

Once a change is detected, the next step S₃ consists in determining appropriate adaptation actions A. This step can be performed by the analysis module AM according to dependencies information DI.

The dependencies information DI is information related to the dependencies between the functions. This information can be preconfigured information stored in a database, notably, information provided by a human operator.

Furthermore, they can be enriched dynamically from the measurements M received by the data collector DC. In parallel of the detecting step S₂, the measurements M can also be analyzed in a step S₅ for determining dependencies schemes between the functions.

The analysis module AM is adapted to process the data coming from the data collector DC (i.e. measurements M) and stored in the database of the dependencies information DI in order to determine some correlations. For doing so, it can implement various techniques in data analysis, and, notably pattern recognition and/or machine learning techniques, like e.g. neural networks, supervised learning, etc. Any other techniques are accessible to the man skilled in art.

The analysis module may thus be adapted to
- Determine these correlations or dependencies schemes, in order to update a database "dependencies information" DCI;
- Make use of the knowledge stored in the dependencies information DCI database to determine possible dependent event to a detected change within the measurements M.

For example, the analysis module AM can determine than when an event E_{A} happens, there is a strong probability that event E_{B} will also happen. This determination can be done by experiencing several occurrences of events E_{A} and E_{B} during a certain period. The relationship between the events E_{A} and E_{B} can be called "dependency scheme".

Once such a dependency scheme is determined, it can be used for future determination of future events, and thus appropriate adaptation actions A.

In this example, if the event E_{A} is detected, knowing the dependency scheme linking events E_{A} and E_{B}, the analysis module AM can infer that the event E_{B} will probably happen, and, therefore, that adaptation actions should also concern the event E_{B}.

The correlations that are determined can be between events timely distant: for instance, an event in the signaling plane can be correlated with an event in the data plane in the future. A change in the signaling plane can be representative of an increased number of calls or service requests. Only after the calls or services are established, the data plane can see an increased activity in the traffic.

It should also be noticed that the dependency schemes can be far more complex than just establishing a correlation between two events. Indeed, communication networks and applications and services deployed onto such communication networks form very complicated interaction web, wherein dependencies can become very difficult to track.

For this reason, the analysis module AM can implement technologies like neural networks and the like, which are adapted for analyzing large amount of data.

As mentioned earlier, the dependency information DI can also be, at least partly, provided by a human operator. For instance, the operator knowing the service or application, which is provisioned, can determine the dependencies schemes associated with the service or application.

In addition, the analysis module AM can also make use of additional information, like for instance:
- Service graph: knowing the service graph and the dependencies between functions enables the management apparatus SDM to scale functions in relation to traffic observed on other functions. For example, if it is known that functions F₁₂ and F₂₃ need to be dimensioned in a 1:2 relation, a scale-out triggered in function F₁₂ can automatically scale function F₂₃ according to this ratio.
- Traffic Mix: knowing the traffic mix a system is processing enables the management apparatus SDM to tailor the system to the given demand. For example, an IMS (IP Multimedia Subsystem) handles messages processed by the signaling plane only (e.g. instant messages) and messages that will lead to traffic on signaling and data planes (e.g. the creation of a call). Knowledge about the mix ratio between instant messages and call traffic enables the management apparatus SDM to properly scale the service graph SC to the current demand.
- Performance data: knowing the typical workload based on historic pattern or previous knowledge (e.g. daily patterns of phone calls...) enables the management apparatus SDM to prepare the service graph for the expected traffic mix by scaling all the functions appropriately.

Furthermore, the dependencies information DI can comprise dependencies schemes between pure application-related data and events on the virtual infrastructure. For instance, applications can comprise social networks, and data mined into the social networks can be used to assess future events on some network elements, and, possibly, even on some particular functions.

Such dependency schemes can be used, once established, to trigger adaptation actions in advance of the change being detected on the network element or function itself.

The management apparatus SDM can be an open system, on which modules and algorithms can be plugged. For instance, more advanced analytics algorithms can be plugged to fine tune the processing of the management apparatus SDM.

In the case the change detected at step S₂ is an increase of a load parameter, the appropriate adaptation actions A can be the scale out of one or several functions, as it has been explained in the examples described above.

In a step S₄, these adaptation actions are transmitted toward the underlying virtual infrastructure by an action dispatcher AD. These adaptation actions A aim at adapting the deployment of the network elements onto it.

More precisely, the scale-out actions can be transmitted to a cloud manager or any other managing entity of the virtual infrastructure to modify the way a particular function, or network element, to be scaled out, is deployed onto the virtual infrastructure.

For instance, if the adaptation actions A consists in scaling out the functions F₁₂ and (for example because of a determined dependency) F₂₃, the virtual machines implementing these two functions can be scaled out,
- By creating one or several new instance(s) of the virtual machine; and/or
- By reallocating the virtual machine to another physical location (which would offer more processing means, or can be more optimal in term of networking proximity), and/or
- By increasing the physical resources (CPU, memory, networking means...) allocated to the virtual machine; and/or
- By tuning or adapting the applications corresponding to these functions, etc.

Many types of adaptation actions A can be possible and are accessible to the man skilled in the art. The management apparatus SDM can select the best adaptation actions according to rules which can be preset. In addition, some learning mechanisms can also be deployed to have the management apparatus SDM select the best adaptation actions A according to a dynamic knowledge base.

According to the invention, therefore, the adaptation actions A not only react on the network element or function for which a change in the measurements M was detected, but also anticipates on network element(s) or function(s) which depends on it, as it has been determined by previously set dependency schemes. These dependency schemes could be manually provisioned, dynamically determined by learning mechanisms, or determined by other means.

The invention has been described with reference to preferred embodiments. However, many variations are possible within the scope of the invention.

## Claims

1. Method for adapting the deployment of network elements (NE₁, NE₂, NE₃) of a network (N) onto a underlying virtual infrastructure, said network providing at least a service made of one or several functions (F₁₁, F₁₂, F₁₃... F₃₄) linked by a service graph (SC) and provided by said network elements, said method comprising steps of:
- Receiving (S₁) measurements (M) from said underlying virtual infrastructure;
- From said measurements, detecting (S₂) a change related to a function among said one or several functions
- Determining (S₃) adaptation actions (A) according to dependencies information (DI), related to dependencies between said functions
- Transmitting (S₄) said adaptation actions toward said underlying virtual infrastructure for adapting said deployment.

2. Method according to claim 1, wherein said dependencies information (DI) contains preconfigured information stored in a database.

3. Method according to claim 1 or 2, further comprising a step of analyzing (S₅) said measurements (M) for determining dependencies schemes between said functions and for updating said dependencies information (DI) according to said dependencies schemes.

4. Method according to the previous claim, wherein said step of analyzing is performed by pattern recognition and/or machine learning techniques.

5. Method according to any of the previous claims, wherein said change is an increase of a load parameter.

6. Method according to any of the previous claims wherein said step of receiving further comprises receiving application-specific measurements.

7. Computer program product comprising computer-executable instructions for performing the method according to any of the previous claims, when run onto a data processing unit.

8. Digital data storage medium encoding a machine-executable program of instructions to perform the method according to any of the claims 1 to 6.

9. Management apparatus (SDM) for dynamically adapting the deployment of network elements (NE₁, NE₂, NE₃) of a network (N) onto a underlying virtual infrastructure, said network providing at least a service made of one or several functions (F₁₁, F₁₂, F₁₃... F₃₄) linked by a service graph (SC) and provided by said network elements, said management apparatus comprising:
- A data collector (CD) for receiving measurements (M) from said underlying virtual infrastructure;
- An analysis module (AM) for, from said measurements, detecting a change related to a function among said one or several functions and determining adaptation actions (A) according to dependencies information (DI) related to dependencies between said functions;
- An action dispatcher (AD) for transmitting (S₄) said adaptation actions toward said underlying virtual infrastructure for adapting said deployment.

10. Management apparatus according to the previous claim, comprising a database for storing dependencies information (DI) containing preconfigured information.

11. Management apparatus according to the claims 9 or 10, further comprising a dependency updater (DU) for determining dependencies schemes between said functions and for updating said dependencies information (DI) according to said dependencies schemes.

12. Management apparatus according to any of the claims 9 to 11, wherein said analysis module (AM) is adapted to perform pattern recognition and/or machine learning techniques.

13. Management apparatus according to any of the claims 9 to 12, wherein said change is an increase of a load parameter.

14. Management apparatus according to any of the claims 9 to 13, wherein said step of receiving further comprises receiving application-specific measurements.

15. System comprising a communication network (N) made of network elements (NE₁, NE₂, NE₃) and a management apparatus (SDM) according to any of the claims to 14.

## Amended claims

### Amended claims in accordance with Rule 137(2) EPC.

1. Method for adapting the deployment of network elements (NE₁, NE₂, NE₃) of a network (N) onto a underlying virtual infrastructure, said network providing at least a service made of one or several functions (F₁₁, F₁₂, F₁₃... F₃₄) linked by a service graph (SC) and provided by said network elements, said method comprising steps of:
- Receiving (S₁) measurements (M) from said underlying virtual infrastructure;
- From said measurements, detecting (S₂) a change related to a function among said one or several functions
- Determining (S₃) adaptation actions (A) according to dependencies information (DI), related to dependencies between said functions
- Transmitting (S₄) said adaptation actions toward said underlying virtual infrastructure for adapting said deployment,
wherein it further comprises a step of analyzing (S₅) said measurements (M) for determining dependencies schemes between said functions and for updating said dependencies information (DI) according to said dependencies schemes.

2. Method according to claim 1, wherein said dependencies information (DI) contains preconfigured information stored in a database.

3. Method according to any one of the previous claims, wherein said step of analyzing is performed by pattern recognition and/or machine learning techniques.

4. Method according to any of the previous claims, wherein said change is an increase of a load parameter.

5. Method according to any of the previous claims wherein said step of receiving further comprises receiving application-specific measurements.

6. Computer program product comprising computer-executable instructions for performing the method according to any of the previous claims, when run onto a data processing unit.

7. Digital data storage medium encoding a machine-executable program of instructions to perform the method according to any of the claims 1 to 5.

8. Management apparatus (SDM) for dynamically adapting the deployment of network elements (NE₁, NE₂, NE₃) of a network (N) onto a underlying virtual infrastructure, said network providing at least a service made of one or several functions (F₁₁, F₁₂, F₁₃... F₃₄) linked by a service graph (SC) and provided by said network elements, said management apparatus comprising:
- A data collector (CD) for receiving measurements (M) from said underlying virtual infrastructure;
- An analysis module (AM) for, from said measurements, detecting a change related to a function among said one or several functions and determining adaptation actions (A) according to dependencies information (DI) related to dependencies between said functions;
- An action dispatcher (AD) for transmitting (S₄) said adaptation actions toward said underlying virtual infrastructure for adapting said deployment,
wherein it further comprises a dependency updater (DU) for determining dependencies schemes between said functions and for updating said dependencies information (DI) according to said dependencies schemes.

9. Management apparatus according to the previous claim, comprising a database for storing dependencies information (DI) containing preconfigured information.

10. Management apparatus according to any of the claims 8 to 9, wherein said analysis module (AM) is adapted to perform pattern recognition and/or machine learning techniques.

11. Management apparatus according to any of the claims 8 to 10, wherein said change is an increase of a load parameter.

12. Management apparatus according to any of the claims 8 to 11, wherein said step of receiving further comprises receiving application-specific measurements.

13. System comprising a communication network (N) made of network elements (NE₁, NE₂, NE₃) and a management apparatus (SDM) according to any of the claims 8 to 12.
